# EUROPEAN PATENT SPECIFICATION

(11) **EP 1 800 004 B1**
(45) Date of publication and mention of the grant of the patent: **05.03.2008**
(21) Application number: 04800459.2
(22) Date of filing: 12.11.2004
(51) Int. Cl.: F03D 9/00, F03D 9/02, F03D 11/04

(54) **MOBILE POWER WIND UNIT**
MOBILE WINDENERGIEEINHEIT
UNITE AEROGENERATRICE MOBILE

(30) Priority: 13.04.2004 SK 1742004
(43) Date of publication of application: 27.06.2007
(73) Proprietor: Donoval, Jan, 97703 Brezno (SK)
(72) Inventor: CIENCIALA, Jiri, deceased (SK)
(74) Representative: Belicka, Ivan
(86) International application number: PCT/SK2004/000012
(87) International publication number: WO 2005/100786

(56) References cited:
- DE-C- 375 498
- DE-C1- 19 646 612
- DE-U1- 29 510 415
- FLOATOGRAPH TECHNOLOGIES: "Trailered Telescoping Mast with Self Contained Power" [Online] 2004, FLOATOGRAPH TECHNOLOGIES , MARION, INDIANA, USA , XP002317274 Retrieved from the Internet: URL:www.floatograph.com/powertrailer> [retrieved on 2005-02-10] figures

## Description

### Area of Technology

This invention pertains to the Mobile Power Wind Unit, which shall be used for generation of electric power in these areas, where electric power is not delivered or where a public electric network is destroyed or damaged.

### Existing Status of Technology

At present, many various types of systems for generation of electric power exist, which are made by different producers, and are known within engineering practice, while they are considered to be mobile devices operating based on this principle, that a drive unit is used (e.g. a combustion or diesel engine), and is connected to a generator, which provides generation of electric power, with the use of an appropriate interface unit or device. In order to provide operation of this device, an appropriate type of fuel is necessary (e.g. petrol or crude oil), which shall be transferred in vessels or containers, when changing a location of the actual system for generation of electric power. However, the other mobile devices used for these purposes are known, as well, and they utilize a wind force, when generating their electric power. The document denoted as EP 1240427 describes a device, where a generator is transported with the use of bench, being a part of a mobile band vehicle, and then the generator is erected and located at this place, where a force of wind shall be converted into electric power. The document denoted as JP 3028045/2003 describes a mobile device created based on the hoist, which is able of motion to the optimal location. The hoist contains a telescopic arm, at the end of which a wind generator is mounted. The above-mentioned devices contain all needed subordinated parts connected to an appropriate mobile facility, while this design is considered to be their main disadvantage. The document denoted as WO 03008803 contains a description of a mobile wind and solar power aggregate. The device contains a transport housing (cell), which plays a role of support construction used for fixing the wind generator column and for fixing of solar segments, as well.

Large dimensions and closely related mobile problems represent a disadvantage of such solution.

An example of prior art mobile power wind unit is also know from document DE 196 46 612.

### Basic Principles of the Invention

The described invention represents a solution of the Mobile Power Wind Unit designed in order to provide transport via standard trailer with four reels and solid frame, while that trailer may be used for more purposes. A unit weight does not exceed a maximum weight of the trailer with four reels and load pulled by car. The Mobile Power Wind Unit has such floor projection dimensions, which enable their transport in the ship container and they may be stored over each other. The Mobile Power Wind Unit has a carrying bench equipped with a carrying frame, where the mechanism of adjustable stabilizing foots is located and arranged.

On a carrying bench, there are implemented extension or slide arms, which stabilize the carrying bench during its operation. A rotating storage is located in a middle part of bench, where the above-mentioned extension or slide arm together with a generator is mounted. An erection is done with the use of cable rolled on the coiler via sheave, which is located on the auxiliary arm. After having erected, this arm is being assured with the use of position protectors. However, the following supplementary elements are located on the bench: accumulators, distribution and control panel, which contains plugs for current off take, measuring instruments with electro supply meter and connecting cable. A pump with hoses for pumping of fluids (liquids) located on the carrying bench creates an integral of the unit as well. The unit may be equipped with a diesel aggregate with the fuel containers, if necessary, while these segments are also located on the carrying bench.

### List of Figures shown in the Drawings

- Fig.1: - Mobile Power Wind Unit packed so that, it can be stored or transported.

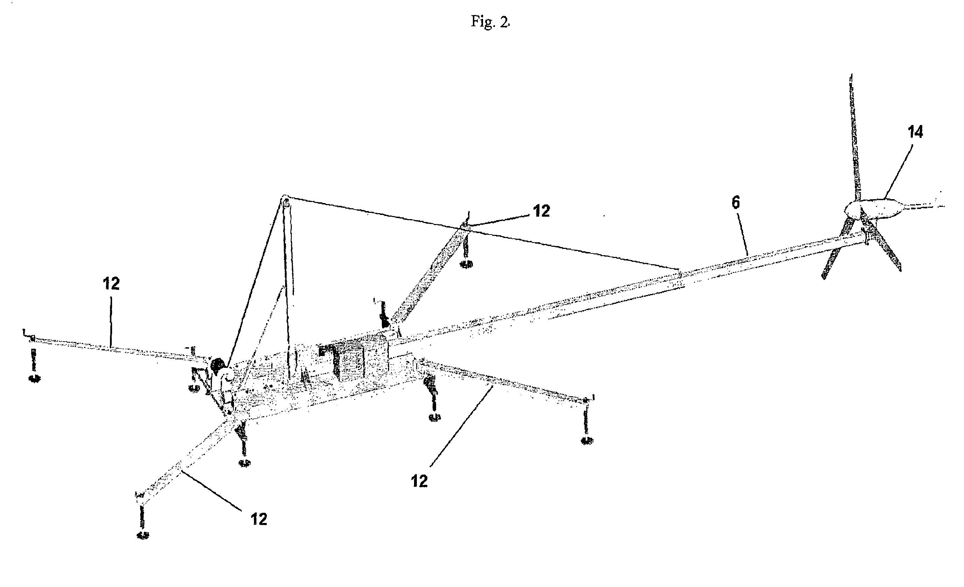

- Fig.2: - Mobile Power Wind Unit prior to erecting the extension or slide arm together with the generator.

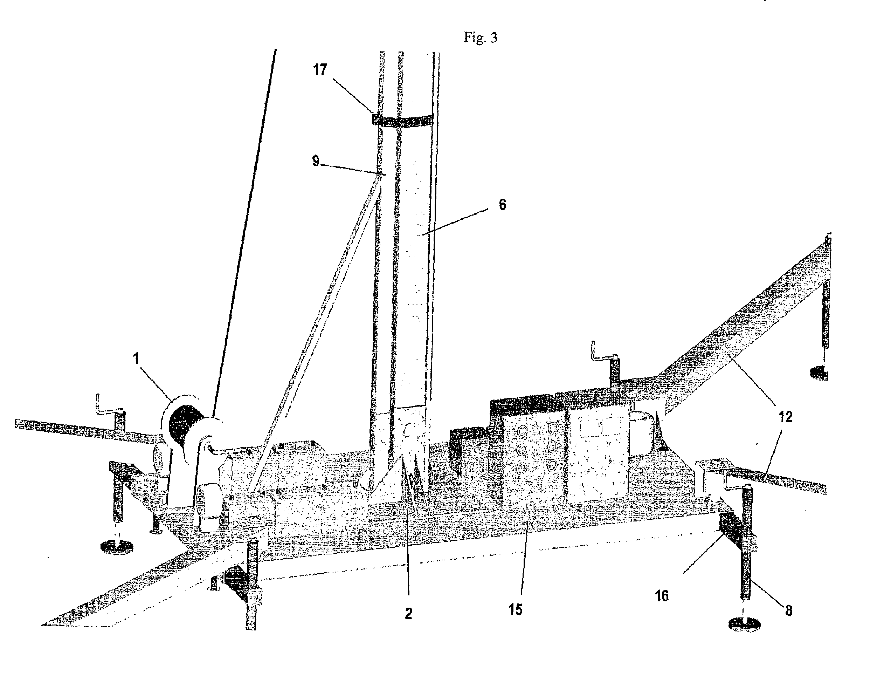

- Fig.3: - Fixation of the extension or slide arm in the operational position.

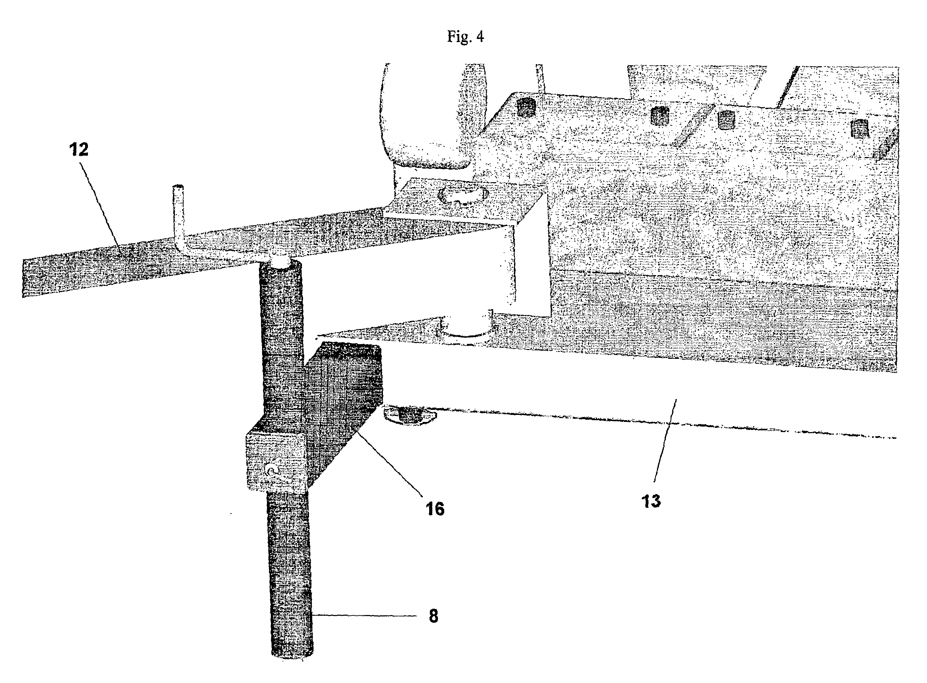

- Fig.4: - Mechanism with adjustable stabilizing foot.

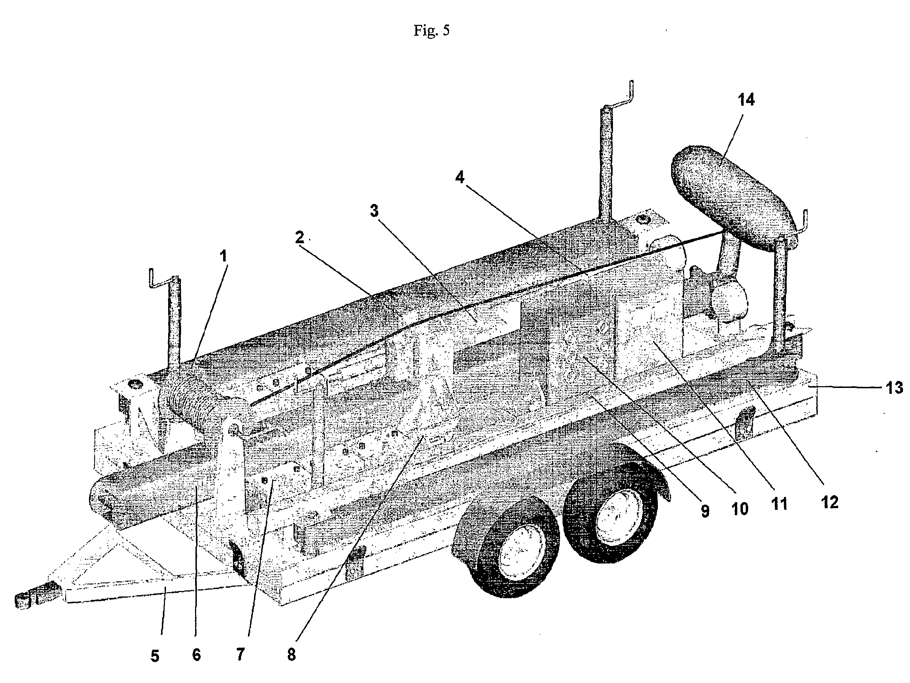

- Fig.5: - Mobile Power Wind Unit in the mobile state

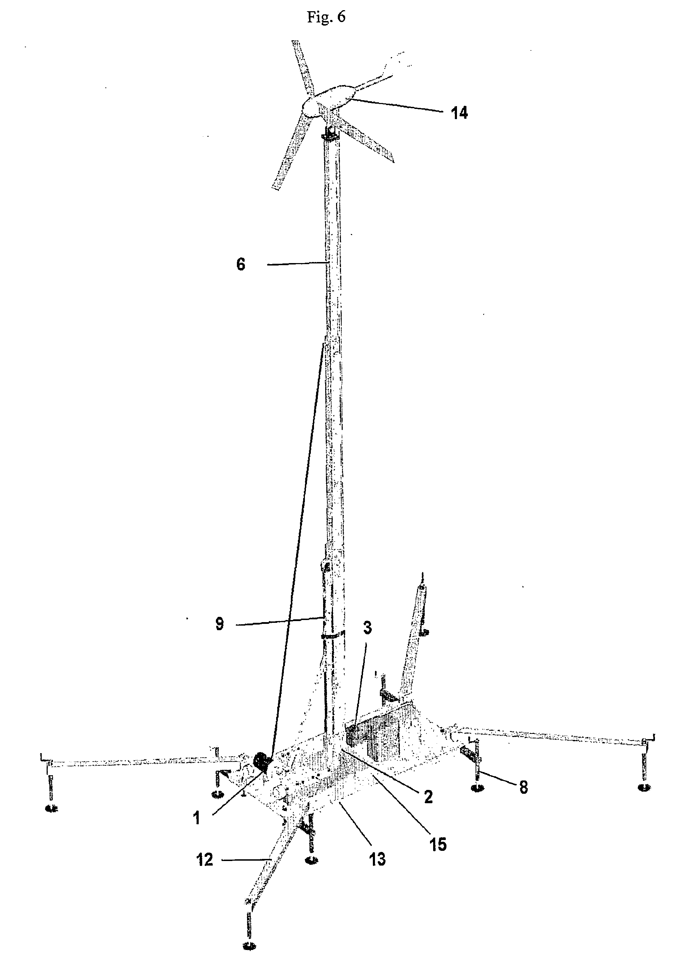

- Fig.6: - Mobile Power Wind Unit in the distributed operational state

### Examples of the Invention Implementation

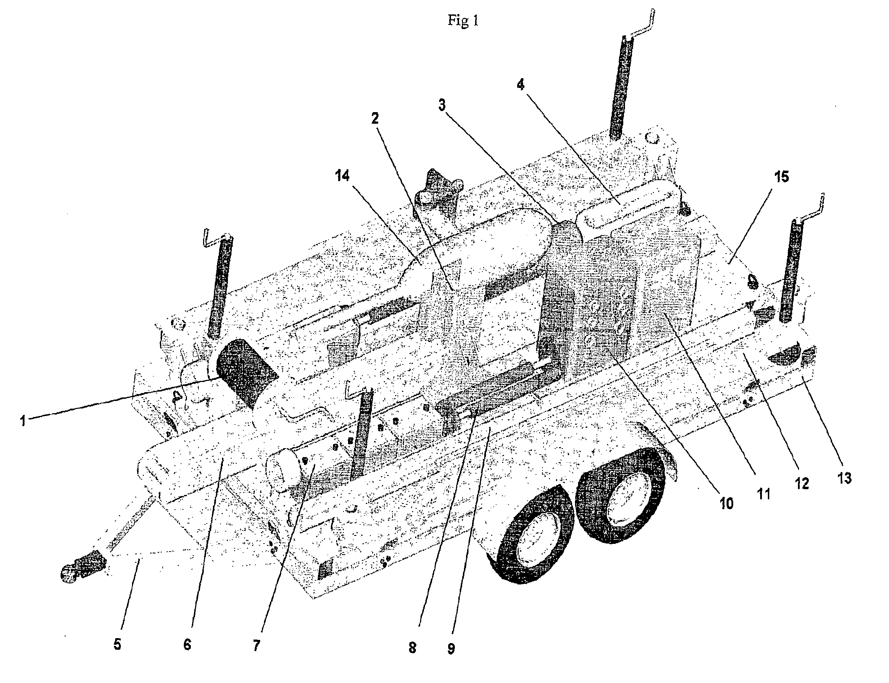

The Mobile Power Wind Unit has such floor projection dimensions, which enable their transport in the ship container and they may be stored over each other. A standard trailer 5 with four reels may be used in order to provide transport of units to their destination, while the trailer is equipped with a stabile frame, which is pulled by car or with the use of any other mobile facility. All parts closely related to the Mobile Power Wind Unit are located on a carrying bench 15 (see also Fig.1), when providing its transport or storage. The Mobile Power Wind Unit consists of the carrying bench 15, which contains a carrying frame 13, where a mechanism 16 with adjustable stabilizing foots 8, which enable lifting-off, equalizing and stabilizing of the carrying bench 15. On a carrying bench 15, there are implemented extension or slide arms 12, which stabilize that carrying bench 15 during its operation. A rotating storage 2 is located in the middle part of the bench 15, where the above-mentioned extension or slide 6 arm together with a generator is mounted 14. An erection of this extension or slide arm 6 is done with the use of a cable fixed on the extension or slide arm 6 passing throughout a sheave related to the auxiliary arm 9 into the roller 1 which is located in a front part of the carrying bench 15. After having erected, this arm 6 is being assured with the use of position protectors 17. However, the following supplementary elements are located on the bench 15: accumulators 7 distribution and control panel 10, which contains plugs for current off take with voltage of 12V, 24V, 48V, 120V, 220V, 380V, measuring instruments 11 with electro supply meter and connecting cable 4. A pump with hoses for pumping of fluids (liquids), e.g. water or oil, located on the carrying bench 15 creates an integral of the unit as well. This unit may be equipped with a diesel aggregate with the fuel containers, if necessary, while these segments are also located on the carrying bench 15.

### List of reference marks

1 coiler
2 rotating storage
3 pump
4 connecting cable
5 trailer
6 extension or slide arm
7 accumulators
8 stabilizing foots
9 auxiliary arm
10 distributing and control panel
11 measuring instruments
12 extension or slide stabilizing arms
13 carrying frame
14 generator
15 carrying bench
16 mechanisms
17 position protectors

## Claims

1. A Mobile Power Wind Unit comprising a standard trailer containing four reels and a solid frame, which has a suitable connection for a car, where all segments of this unit are arranged and stored on a carrying bench with a carrying frame, whereon are arranged mechanisms with stabilizing feet for lifting equalizing and stabilizing of the carrying bench; the carrying bench also contains slide arms for stabilisation; in the middle part of the carrying bench is arranged a rotating storage (2) for fixing of an extension arm (6) with a generator (14); in the front part of the carrying bench (15) there is located a roller (1) for the erection of the extension arm (6) with the use of an auxiliary arm (9) containing a sheave; on the carrying bench (15) are located and arranged among each other accumulators (7), a distributing and control panel (10) with plugs for current off-take, measuring instruments(11) with electro supply meter and a connecting cable (4); on the carrying bench (15), there is located a pump (3) with hoses for pumping of fluids or liquids.

2. The Mobile Power Wind Unit according to the claim No. 1 further, **characterised in that,** the carrying bench (15) contains a diesel aggregate with fuel containers.

## Patentansprüche

1. Die Mobile Energetische Windeinheit, bestadet aus einem Standard-Hänger mit vier Räder und einem festen Rahmen, der hinter einem Wagen geschaltet ist, wo alle Elemente von dieser Einheit auf der Tragfläche mit festem Rahmen geordnet und auferlegt sind, an dem Mechanismen mit Stabilisierungsfüssen für Aufbocken, Ausrichet und Stabilisierung der Tragfläche geordnet sind; die Tragfläche enthält sowohl auch teleskopische Ärme für die Stabilisierung, in der Mitte der Tragfläche (15) is geordnet ein Drehbettung (2) für die Befestigung des teleskopischen Armes (6) mit einem Generator (14); in dem vorderen Teil der Tragfläche (15) ist eine Winde (1) für die Aufrichtung der teleskopischen Armes (6) mit der Hilfe der Hilfsarm (9) mit der Winde gesetzt; auf der Tragfläche (15) sind miteinander geordnet und auferlegt Akumulatoren (7), Verteiler- und Steuerpanel (10) mit Netzsteckdosen für Energieabnahme, Messgeräte (11) mit Elektrizitätszähler und Anschlusskabel (4), auf der Tragfläche (15) ist auch ein Pumpapparat (3) mit Schläuchen für Flussichkeitsschöpfen eingeräumt.

2. Die Mobile Energetische Windeinheit, nach dem ersten Anspruch, augezeichnet damit, dass auf der Tragfläche ein Dieselagregat mit einem Treibstofftank einferäumt ist.

## Revendications

1. Unité de transfert éolienne energetique se composant d'une remorque compose des 4 roues et du châssis fixe, qui est attelé à la voiture, où tous les élements de l'unité sont arrangés et déposés sur la plate-forme portante avec le châssis portant sur lequelle sont les mécanismes aux pieds de stabilisation pour soulever, mettre en balance et stabiliser la plate-forme portante; la plate-forme portante aussi comporte des bras télescopiques pour stabilisation; au milieu de la plate-forme portante est arrangé l'ajustement pivotant (2) pour la fixation du bras télescopique (6) avec le générateur (14); au-devant de la plate-forme portante (15) est le dévidoir (1) pour le dressage du bras télescopique (6) par l'intermédiaire du bras auxiliaire (9) avec la poulie; sur la plate-forme portante (15) sont disposés mutuellement les accumulateurs (7), le tableau (10) de commande et de distribution aux prises de courant, les mesureurs (11) avec les horloges-mère et les câbles de raccordement (4), sur la plate-forme portante (15) sont aussi la pompe (3) aux tuyaux pour le pompage du liquide.

2. Unité de transfert éolienne energetique selon le revendication 1, **caractérisée en ce que** l'agrégat diesel avec récipients pour combustibles est sur la plate-forme portante.
